# EUROPEAN PATENT SPECIFICATION

(11) **EP 2 661 091 B1**
(45) Date of publication and mention of the grant of the patent: **14.10.2015**
(21) Application number: 12166809.9
(22) Date of filing: 04.05.2012
(51) Int. Cl.: H04N 21/482, G06F 3/048, H04N 21/431, G06F 3/033, G06F 3/038

(54) **Controlling a graphical user interface**
Steuerung einer graphischen Benutzerschnittstelle
Commande d'une interface utilisateur graphique

(43) Date of publication of application: 06.11.2013
(73) Proprietor: Novabase Digital TV Technologies GmbH, 85356 München (DE)
(72) Inventor: Pauli, Michael, 04105 Leipzig (DE)
(74) Representative: Maiwald Patentanwalts GmbH

(56) References cited:
- WO-A1-2011/159205
- US-A1- 2009 049 477
- US-A1- 2010 175 026
- US-A1- 2010 199 309
- US-A1- 2011 148 926
- US-A1- 2012 075 196
- US-A1- 2012 086 624

## Description

### Field of the Invention

The present invention relates to a controlling device for controlling a graphical user interface GUI, a multimedia device including a controlling device for controlling a graphical user interface, as well as a method for controlling a graphical user interface device, and in particular to a controlling device, a multimedia device, and a method allowing a user to navigate through and interact with a graphical user interface with a transparent structure of menu bullets.

### Background of the Invention

Graphical user interfaces GUI of the prior art include classic menu structures like pull down menus or flip menus for providing a plurality of menu bullets on a display device. However, most of the presently known graphical user interfaces are not capable of providing a plurality of menu bullets in a transparent way and providing a transparent navigation there through, so that the user does not have a full overview over the menu structure. This is relevant in particular for complex menus of television programs.

US 2010/0175026 A1 describes a single loop of menu bullets of a navigation structure illustrating e.g. movies to be selected by a user.

US 2012/0075196 describes a ring worn by a user, so that the user may move the ring with respect to the finger to generate a command.

### Summary of the Invention

The invention is defined by the independent claim. Further embodiments are incorporated in the dependent claims.

It should be noted that the following described exemplary embodiments of the invention apply also for the controlling device, the multimedia device, the method, the computer program element, and the computer readable medium.

According to an exemplary embodiment of the invention, there is provided a controlling device for navigating through a menu structure of a plurality of menu bullets being arranged in a three-dimensional virtual reality on a display device, the controlling device comprising a receiving unit being adapted for receiving a user's intention for three-dimensional menu navigation starting from a view of a present menu bullet to a target menu bullet, a computing unit being adapted for computing an illustration of the menu structure seen from a point of view of the target menu bullet, and a display interface unit being adapted for outputting a computation result of the illustration of the menu structure seen from a point of view of the target menu bullet to a display device.

Such a controlling device allows for navigation through a menu structure, wherein the user at first may have a view on the menu structure seen from a present menu bullet. The present menu bullet may be a menu bullet corresponding to a present state of a multimedia device, for example a presently selected program of a presently selected TV channel. The present menu bullet may include a visualization of the present display content, for example a cut-out of the present TV channel content in a reduced size or thumbnail. The user's intention may be transferred to the receiving unit by any possible way, for example actuating keys on a key pad, moving an arrow in a displayed menu structure, pointing the intention by a pointing device or detecting a user's motion. Three-dimensional menu navigation may be understood as navigation through a menu including menu bullets not only in a two-dimensional arrangement, but also in a three-dimensional arrangement. For example, when displaying menu bullets on a screen, the menu bullets may be arranged side by side, left and right, top and bottom, as well as in front or behind to each other, going into the deep of the two-dimensional display. The computing unit being adapted for computing an illustration of a menu structure seen from a point of view of the target menu bullet, wherein the target menu bullet may be a menu bullet being selected by a user for example by evaluating the user's intention. The computing unit may compute not only the view of the target menu bullet, but also imaginary views between the present menu bullet and the target menu bullet, so that the user may get an impression to move from the present menu bullet to the target menu bullet. Thus, the user keeps an overview from where to where the user is navigating. In particular, the user gets an impression on the navigation path from the present menu bullet to the target menu bullet. The display interface unit being adapted for outputting a computation result to a display device, the computational result may include the illustration of the menu structure seen from a point of view of the target menu bullet. This may also include the outputting of a computational result of the illustration of intermediate steps, so that the user may get an impression on actually moving through the menu structure instead of only jumping from one menu bullet to the target menu bullet. A display device may be for example a monitor, a projector including a projection surface or a head-up display and shall not be limited to the fore-mentioned display devices.

With such a controlling device, a user maintains an overview on the navigation through a three-dimensional virtual reality of a menu structure, in particular when navigating not only through a two-dimensional menu structure but in particular when navigating through a three-dimensional menu structure. In particular when using a two-dimensional display device, like a monitor or a projection surface, the controlling device will facilitate the navigation within the plane of the display device or out of the plane of the display device. It should be noted that the controlling device may also be combined with a three-dimensional display device, like 3D TV sets, 3D projectors including respective auxiliary devices allowing a user to recognize the illustration as a three-dimensional virtual reality.

According to an exemplary embodiment of the invention, the controlling device further comprises a remote control being connected to the receiving unit, wherein the remote control comprises input terminals for inputting navigation command representing the user's intention for three-dimensional menu navigation.

Thus, it is possible for a user to input commands into a remote control. Such a remote control may be used by a plurality of users without the need to be personalized.

According to an exemplary embodiment of the invention, the remote control comprises navigation buttons being connected to the input terminals, wherein the remote control is adapted to select a target menu bullet in the three-dimensional virtual reality by the navigation buttons, activation thereof representing the user's intentions.

The navigation buttons may be arranged on a surface of a remote control and may further be arranged in a way, that the user intuitively knows which button may serve for a particular navigation direction. It should be noted that the buttons may also be realized by soft buttons on a touch pad or touch screen. Further, particular activating combinations of buttons may serve as a coding for additional functions.

According to an exemplary embodiment of the invention, the remote control comprises a pointing unit and a pointing sensitive unit, wherein the pointing sensitive unit is mounted with respect to a display device so as the detect a pointing location of the pointing unit onto the display device.

Thus, it is possible to update a common display device by using the controlling device with the pointing unit and the pointing sensitive unit, as the pointing sensitive unit may be adapted to be mounted to already existing display devices. The pointing sensitive unit may be a transparent screen being sensitive to a pointing operation of the pointing unit. The pointing sensitive unit may also be a radio-controlled or infrared detector detecting the pointing direction of the pointing unit. With this respect, the pointing sensitive unit may be mounted at a side of a display device, so as to avoid any covering of the screen of the display device.

According to an exemplary embodiment of the invention, the remote control comprises a motion sensor arrangement being connected to the input terminals, wherein the motion sensor arrangement is adapted to detect a user's motion representing the user's intention.

Thus, it is possible to navigate through the three-dimensional menu structure by moving the remote control. In particular, the remote control may include different kinds of motion sensors, being capable of detecting the motion and thus the user's intention for navigation. Such motion sensors may be for example acceleration sensors. Thus, it is possible to transmit the motion of the user representing the user's intention to the computing unit. The computing unit may, based on the detected motion, compute an illustration of the menu structure seen from a point of view of a target menu bullet, which is intended by the user.

According to an exemplary embodiment of the invention, the remote control is gripping free body attachable to the user's body so as to follow a user's body part motion, to which users body part the remote control is to be attached.

Thus, it is possible to keep the user's hands free, so that the user may use his hands for other purposes. The remote control may be for example attached to a user's arm, a user's head, or for example a user's hand. Thus, the user may move the body part to which the remote control is attached so as to navigate through the three-dimensional menu structure.

According to an exemplary embodiment of the invention, the controlling device further comprises a user's tracking system for determining the spatial position of the user, wherein the user tracking system comprises a user locating unit being adapted for determining the user's position with respect to a display device, wherein the user's locating unit is connected to the receiving unit for providing a user's position as the user's intention.

Thus, it is possible to track the user's movement, so that the movement as such may be used for navigation. With this respect, it is not mandatory to provide a separate remote control device being attached to the user's body or being handheld by the user. Moreover, the tracking system may for example detect the user's position, but may also be adapted for determining the orientation of the user so that the user not only by spatial movement may navigate through the three-dimensional menu structure, but also by turning while remaining at the same location. Further, the tracking system may be adapted to track separate body parts of the user, for example the head and/or one or two hands of the user. The tracking system may also detect the orientation of the respective body parts, so that the user may navigate through the menu structure by moving or turning his e.g. hands into particular directions. For this purpose, the tracking system may include an image recognition system for recognizing particular body parts and in particular the position and/or orientation of the body parts. For example, the user may move his hands to the left or right, upward and downward, or forward and backward, or may turn his hands into respective directions to navigate to the respective directions in the menu. In addition, the tracking system may be adapted to recognize a particular position or state of the user's body part so as to recognize that a navigation command starts or ends.

According to an exemplary embodiment of the invention, the computing unit is adapted for computing the illustration of the menu structure seen from the user's position detected by the user tracking system.

Thus, not only the point of view of the target menu bullet may be considered for adapting a display, but also the actual position of the user. For example, the user may move to the left or to the right, wherein the computing unit may respectively adapt the illustration. For example, if two menu bullets are arranged behind to each other, the user may have a view on the second menu bullet behind the first menu bullet by moving to the right, so as to virtually look around the first menu bullet in the front. In other words, the three-dimensional illustration of the menu structure is adapted to the respective user's position, so that the user gets an interactive recognition of the view onto the three-dimensional menu structure.

According to an exemplary embodiment of the invention, the controlling device further comprises a transparent screen being body attachable within the user's view field, wherein the transparent screen is adapted to illustrate the menu structure so as to superimpose the menu structure to the display content of a display device.

Thus, it is possible to provide a personalized visualization of the menu structure to the user, so that for example two users using the same display device may navigate independently from each other. Further, other users are not disturbed if one user navigates through the menu structure being displayed on the transparent screen being attached within the user's view field. Further, each user may have an independent virtual 3D view on the menu, as the menu is visualized individually, while sharing the main display, e.g. for a broadcasting content like a movie. It should be noted that also a non-transparent screen may be used, when illustrating the display content and the menu structure on the screen side by side.

According to an exemplary embodiment of the invention, the computing unit may provide an illustration on the transparent screen in dependence of the user's position.

Thus, it is possible to adapt the illustrated menu on the transparent screen so as to be fixed with respect to the display content. For example, if the user moves his head so that the display device in the view field is shifted for example from the center to the edge, also the displayed illustrated menu is shifted to the edge, so as the superimposing of the menu structure and the display content will be maintained, even if the user moves his head.

According to an exemplary embodiment of the invention, there is provided a multimedia device comprising a display, and a controlling device according to any of the above described embodiments, wherein the computation unit is adapted for adapting the display for displaying the three-dimensional menu structure upon the user's intention.

Thus, the entire multimedia device may be provided with the user.

According to an exemplary embodiment of the invention, the display adaption unit is adapted for controlling the display upon an actual position of the user, so that the user may recognize the three-dimensional menu structure as virtually seen from the actual position of the user.

Thus, it is possible to give the user the impression of a real three-dimensional object when viewing on the three-dimensional menu structure. It should be noted that such a multimedia device may include a respective tracking system for providing the respective positional information of the user so as to evaluate the position of the user with respect to the display device.

According to an exemplary embodiment of the invention, the menu structure comprises menu bullets into a first dimension, menu bullets into a second dimension and menu bullets into a third dimension, wherein the first dimension of menu bullets and the second dimension of menu bullets are displayed parallel to a surface of the display device, wherein the third dimension of the menu bullets is displayed in a direction orthogonal to the surface of the display device.

Thus, it is possible to provide a three-dimensional menu structure, so that a plurality of menu bullets may be provided to the user and being not limited to the plane of two dimensions. In particular, additional menu bullets may be arranged behind a plane, wherein such additional menu bullets may be seen when moving sidewards so as to virtually look around the menu bullets being positioned in the front plane. The first and second dimension may also be illustrated so as to be recognized as a sphere.

According to an exemplary embodiment of the invention, the menu bullets represent television program units, wherein the menu bullets into the first dimension represent television program units of respective television channels on a first time scale, wherein the menu bullets into the second dimension represent television program units of respective broadcasting times of different television channels, wherein the menu bullets into the third dimension represent television program units of respective television channels on a second time scale, wherein the second time scale is larger than the first time scale.

Thus, it is possible to provide a large time scale for the menu structure. In particular in one dimension shorter time steps may be used, wherein into another dimension, larger time steps may be used. For example, subsequent television program units may be provided side by side into one dimension, wherein corresponding television program elements of a following day or a following week may be provided into a different dimension, e.g. the third dimension.

Thus, the user may move along the first dimension to see a television program unit of the present day, wherein the user may for example move along the second dimension or the third dimension to get an overview on the corresponding television program of the following day or the following week.

According to an exemplary embodiment of the invention, the menu bullets into a respective dimension are linked so as to form chain lines, wherein the chain lines into the first dimension are closed loops, wherein the last menu bullet of a respective chain line is linked with the first menu bullet of that chain line in the same level with respect to the third dimension.

Thus, the user maintains in his navigation for example a particular day and does not un-intentionally leave the particular day of the TV program. In other words, the user, when coming to the last program element of a particular day, will arrive at the first program element of the same day. The user may for example switch the day only upon an intended action or movement into a further dimension being different from the first dimension.

According to an exemplary embodiment of the invention, the menu bullets into a respective dimension are linked so as to form chain lines, wherein the chain lines into the first dimension are spiral chain lines, so that the last menu bullet of a first chain line in a first level of the third dimension is linked with the first menu bullet of a second chain line in a second level of the third dimension, wherein the first level and the second level are adjacent levels.

Thus, it is possible to move along a real time track. For example, if the user arrives at the latest program element of the day, the next program element will be the first program element of the next day. In other words, for example, the user may arrive at a particular menu bullet by moving either along the spiral line, or by moving along e.g. the third dimension, which means jumping for example from the present day to a TV program of the next day.

According to an exemplary embodiment of the invention, there is provided a method for controlling a navigation through a menu structure of a plurality of menu bullets, being arranged in a three-dimensional virtual reality on a display device, wherein the method comprises receiving a user's intention for a three-dimensional menu navigation starting from a view of a present menu bullet to a target menu bullet, computing an illustration of the menu structure seen from a point of view of the target menu bullet and outputting a computational result of illustration of the menu structure seen from a point of view of the target menu bullet to a display device.

It should be noted that the method further may comprise receiving user's intention by detecting inputs onto a keyboard of a remote control, and/or detecting a movement of a remote control. Further, the method further may comprise detecting a user's intention by tracking the user's movement and/or the movement of a body part of the user. With this respect, the method may further comprise recognizing the user's body and/or user's body parts and the respective position and orientation thereof.

According to an exemplary embodiment of the invention, there is provided controlling device for navigating through a menu structure of a plurality of menu bullets, the controlling device comprising a receiving unit being adapted for receiving a user's intention for menu navigation, a remote control being connected to the receiving unit, wherein the remote control comprises a motion sensor arrangement being adapted to detect a user's motion representing the user's intention for inputting navigation commands representing the user's intention to the receiving unit, a computing unit being adapted for computing an illustration of the menu structure based on the received user's intention, a display interface unit being adapted for outputting a computation result of the illustration of the menu structure, wherein the remote control is body attachable to the user's body, so as to follow a user's body part motion, to which user's body part the remote control is to be attached.

It should be noted that the body attachable controlling device may also be used for other than three dimensional menu structures. Moreover, the control device may be used for any kind of control or navigation. The motion sensor may include combined or separate sensors for movement detection, acceleration detection and/or position detection. The user's intention may be expressed and detected, respectively, by recognizing a user's motion characteristic, e.g. by a recognizing unit receiving the motion and determining the characteristic. Different characteristics may be allocated to different control commands. A finger click may for example be allocated to an enter command, or particular finger movements may be allocated to movement commands. The characteristics may be allocated to a command by using a look up table. The body attachable device may comprise two parts being movable with resect to each other. This relative movement may be detected as a further characteristic being allocated to particular commands. It should be understood, that the body attachable device may also have three or more parts, the respective movement to each other may be evaluated. The body attachable device may have a power source, a sender and a motion sensor. The body attachable unit may also generate the required energy by gaining energy from the movement, e.g. by using a gyroscope etc.

According to an exemplary embodiment of the invention, the remote control is designed as at least one of a ring, a band, a thimble and a sleeve.

Thus, the user may easy attach the device to the finger or other body parts. The remote control may have a rubber layer avoiding the slipping of the body attachable unit with respect to the body part to which the unit is to be attached. The unit may have an elastic portion to adapt the unit to different body part's sizes. The remote control, i.e. the body attachable unit may be in form of a tube, a single part tube ore a two- or three-part tube corresponding to the phalanges of the finger. Bending a finger may be recognized as a motion characteristic.

According to an exemplary embodiment of the invention, the remote control has at least one surface portion being form fitting with a user's body part.

Thus, the remote control, i.e. the body attachable unit may be fixed to the user's body part. The form fitting shape may avoid displacement of the unit with respect to the body part.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention. Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

It has to be noted that exemplary embodiments of the invention are described with reference to different subject matters. In particular, some exemplary embodiments are described with reference to apparatus type claims whereas other exemplary embodiments are described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered to be disclosed with this application.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage.
A computer program may be stored and/or distributed on a suitable medium, such as an optical storage medium or a solid state medium supplied together with or as part of other hardware, but may also be distributed in other forms, such as via the internet or other wired or wireless telecommunication systems.

### Brief Description of the Drawings

Exemplary embodiments of the present invention will be described in the following with reference to the following drawings.
Fig. 1 illustrates a schematic sketch of the main elements of a controlling device according to an exemplary embodiment of the invention.
Fig. 2 illustrates a three-dimensional menu structure including a plurality of menu bullets according to an exemplary embodiment of the invention.
Fig. 3 illustrates a controlling device including a remote control according to an exemplary embodiment of the invention.
Fig. 4 illustrates a remote control of a controlling device according to an exemplary embodiment of the invention.
Fig. 5 illustrates a further remote control according to an exemplary embodiment of the invention.
Fig. 6 illustrates a body attachable remote control of a controlling device according to an exemplary embodiment of the invention.
Fig. 7 illustrates a controlling device according to an exemplary embodiment of the invention including a pointing unit and a pointing sensitive unit.
Fig. 8 illustrates a schematic overview of a controlling device including a pointing unit and a pointing sensitive unit according to an exemplary embodiment of the invention.
Fig. 9 illustrates a controlling device including a tracking system according to an exemplary embodiment of the invention.
Fig. 10 illustrates a controlling device including a body attachable screen according to an exemplary embodiment of the invention.
Fig. 11 illustrates a multimedia device including a controlling device according to an exemplary embodiment of the invention.
Fig. 12 illustrates an exemplary embodiment of a chain of program elements.
Fig. 13 illustrates an exemplary embodiment of a chain of program elements.

### Detailed Description of Exemplary Embodiments

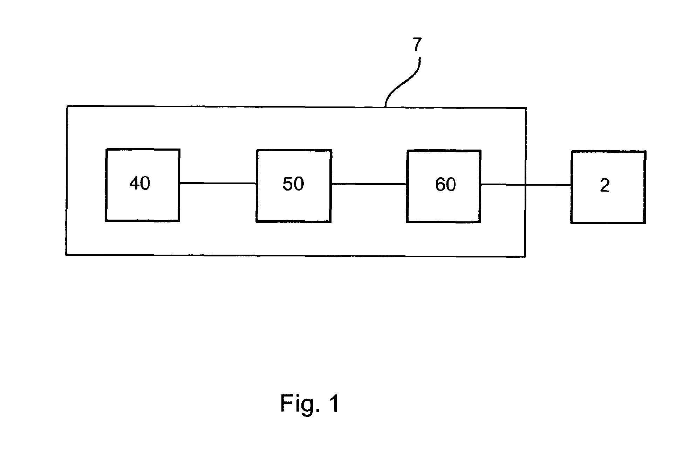

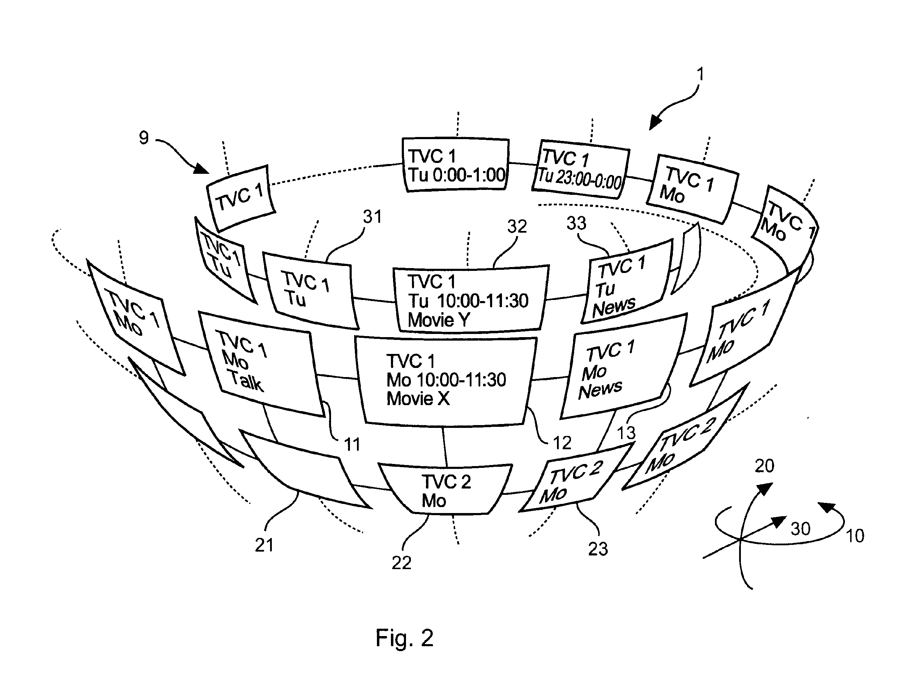

Fig. 1 illustrates a controlling device including the relevant elements according to an exemplary embodiment of the invention. The controlling device 7 according to the illustration of Fig. 1 includes a receiving unit 40, a computing unit 50, and a display interface unit 60. The receiving unit 40 is adapted for receiving a user's intention for a three-dimensional menu navigation starting from a viewpoint of a present menu bullet to a target menu bullet. The user's intention received by the receiving unit may be preprocessed within the receiving unit or may directly be provided to the computing unit 50. The computing unit 50 is adapted for computing an illustration of the menu structure seen from a point of view of the target menu bullet. The user starts at a present menu bullet representing for example a previous selection of a menu bullet, and then intends to choose a new menu bullet. This new menu bullet is referred to as target menu bullet. The user may select the target menu bullet from a visual illustration of the three-dimensional menu structure. The computing unit computes an illustration of the menu structure from a different point of view as a view of a present menu bullet. When for example considering the menu bullet with reference number 12 in Fig. 2 as the present menu bullet, the user for example may select the target menu bullet, for example the menu bullet referenced with reference number 33. The computing unit then will compute a new illustration of the menu structure, so that the user on the new computed menu structure gets the impression that the target menu bullet 33 now is in the position of the menu bullet 12. For this purpose, the computing unit evaluates the user's intention so as to compute a new view onto the three-dimensional menu structure. When illustrating and displaying the new view onto the menu structure, the user may get the impression that the spherical structure of Fig. 2 conducts a movement with two movement components. At first, for example, the user gets the impression to move into the sphere to arrive at menu bullet 32, wherein the menu structure then may be rotated clockwise to arrive at the menu bullet 33. However, the user may also get the impression that at first the menu structure is rotated clockwise to arrive from menu bullet 12 at menu bullet 13 and subsequently moving into the menu structure so as to arrive at menu bullet 33. However, as a further alternative, the user may get the impression that the menu structure rotates clockwise for somewhat more than a complete revolution to follow the chain from menu bullet 12 to menu bullet 13 and so on, so as to arrive at menu bullet 31, 32, and finally the target menu bullet 33. For all the above described alternatives, the computing unit 50 may calculate an illustration of the menu structure seen from a point of view of the target menu bullet 33. It should be noted that the computing unit 50 may not only calculate the illustration of the final target menu bullet, but may also illustrate intermediate steps so as to give the user the impression that the menu structure moves or to give the user the impression that the user moves in and along the menu structure as exemplarily shown in Fig. 2. The controlling device 7 of Fig. 1 further includes a display interface unit 60, being adapted for outputting a computation result of the illustration of the menu structure seen from a point of view of the target menu bullet to a display device 2, to which the controlling device is to be connected. It should be noted, that the display interface unit may also output the intermediate illustrations as described above. It should be noted, that the controlling device of Fig. 1 may include further elements, which are not described with respect to Fig. 1.

Fig. 2 illustrates an exemplary menu structure having a plurality of menu bullets 11, 12, 13; 21, 22, 23; 31, 32, 33. The menu structure 1 of Fig. 2 is a three-dimensional menu structure. A three-dimensional menu structure means that the menu bullets are arranged not only in a two-dimensional plane or a two-dimensional sphere, but also includes a third dimension, which is here illustrated as a direction into the plane or sphere. The menu structure 1 illustrated in Fig. 2 comprises a plurality of menu bullets, wherein the menu bullets are linked into a first dimension, here menu bullets 11, 12, 13, or menu bullets 21, 22, 23. However, the menu bullets may also be linked to each other in a second dimension, top down with menu bullets 12 and 22, or 11 and 21. However, the menu bullets may also be linked into the third dimension, for example menu bullets 12 and 32, or 11 and 31. Into the first dimension, menu bullets may include program elements of successive time slots, so that subsequent program elements are linked to each other along a chain into the first dimension. If the user intends to change the channel, the user has to move along the second dimension, for example from menu bullet 12 to menu bullet 22, wherein menu bullet 22 includes a program element at a corresponding time of that of menu bullet 12, but of a different TV channel. However, if the user wants to check the program content of the same TV channel, but at a later time, the user has to move along the first dimension, for example from menu bullet 12 to menu bullet 13 including the program element following on a time scale the program element of menu bullet 12. Moving along the first dimension means to move along shorter time steps, namely e.g. that of two subsequent program elements. However, if the user wants to check a corresponding program element on a larger time step, for example a corresponding program element at the same time but of the following day (or the following week) the user may move along the third dimension, for example from menu bullet 12 to menu bullet 32, including the same time frame, but for a later day (or week).

The above described controlling device, which will be described in further detail in the following, may serve for navigating through the menu structure exemplary described with respect to Fig. 2.

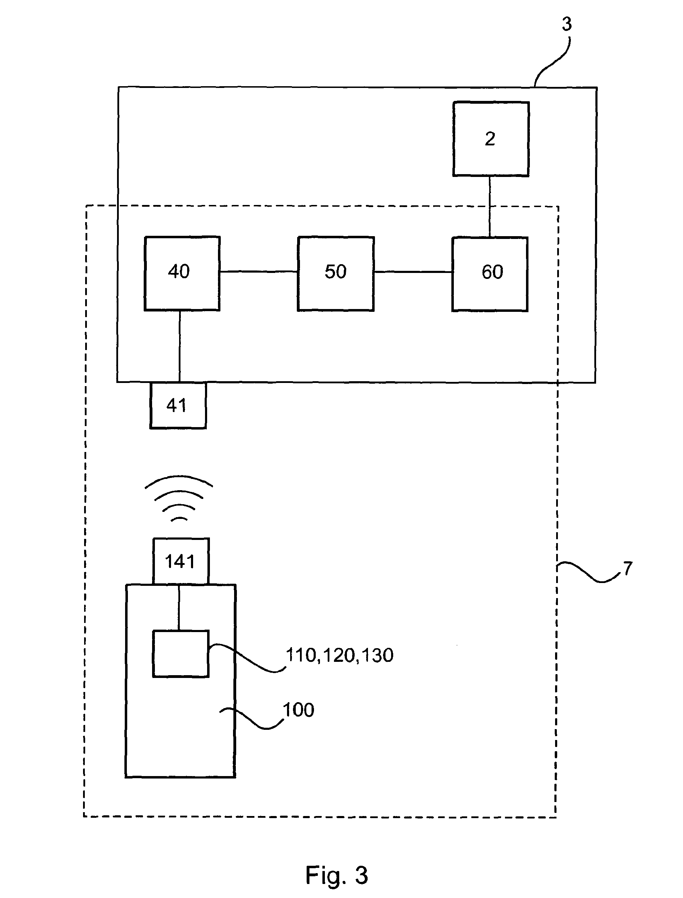

Fig. 3 illustrates a controlling device 7 according to an exemplary embodiment of the invention, wherein the controlling device includes a receiving unit 40, a computing unit 50, and a display interface unit 60, as described above. It should be noted that the receiving unit, computing unit, and display interface unit 40, 50, 60 may be included in a multimedia device 3 or a TV set together with a display device 2. Nevertheless, the controlling device may further include a remote control 100. The remote control 100 for example may comprise an input terminal for remote control navigation buttons, and/or an input terminal for a pointing device, and/or a motion sensor arrangement. Regardless the type of the human machine interface, the user's intention may be detected by elements resident in the remote control 100. The remote control 100 may include an interface 141 for transferring the detected user's intention to a corresponding remote control interface 41 at for example the multimedia device side 3. The transmission of data may be carried out by for example a radio frequency transmission or an infrared transmission or any other appropriate data transmissions. In the following, the different types of remote control and in particular different types of detecting the user's intention will be described in more detail.

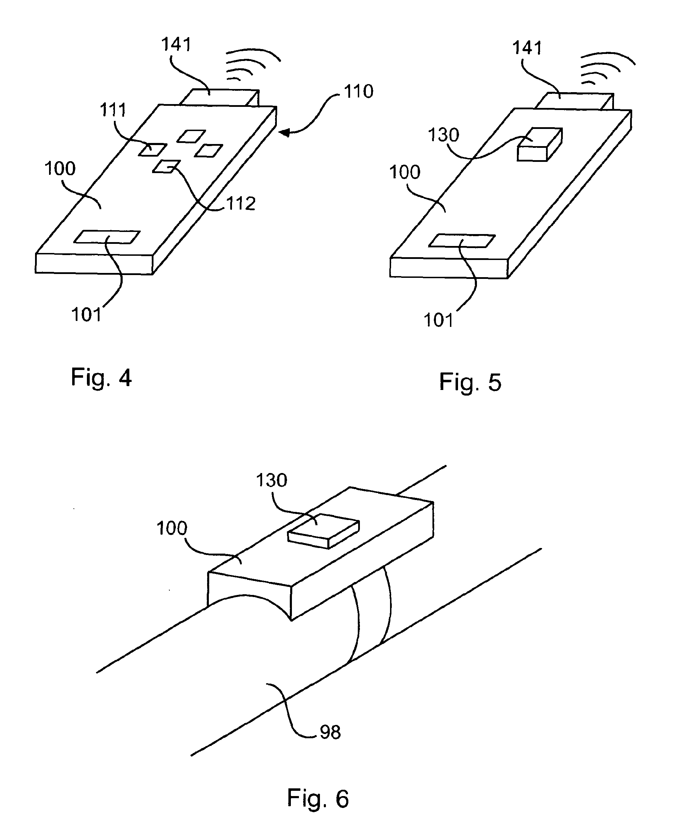

Fig. 4 illustrates a remote control 100 being part of the controlling device. The remote control 100 may include for example navigation buttons 111, 112 for navigating through the menu structure. The buttons 111 and 112 may be used for a pre-selection, wherein the final selection and confirmation of the selection may be carried out by for example an enter button 101. The interface 141 then transfers the entered data to a corresponding interface 41 at the for example multimedia device 3. The interface 41 is connected to the receiving unit 40 being adapted for receiving a user's intention for three-dimensional menu navigation. It should be understood, that the number of keys is not limited to the number shown in Fig. 4 and may include further buttons and further arrangements of buttons. It should be understood, that the arrangement of the buttons as well as the design of the remote control is not limited to the design shown in the figures and only constitutes a schematic illustration thereof.

Fig. 5 illustrates a further exemplary embodiment of a remote control 100, including a motion sensor arrangement. The motion sensor arrangement may include for example an acceleration sensor or a position sensor as well as an orientation sensor, a gyro sensor, or any other device for determining the position and orientation of the remote control. The user may hold the remote control 100 and may move the remote control in order to express his intention. The remote control may comprise an enter button, for confirming a selection, or for further navigation purposes. Similar to the remote control shown in Fig. 2, the remote control of Fig. 5 comprises an interface 141 for transmitting the detected user's intention to a corresponding interface 41 being connected to the receiving unit 40.

Fig. 6 illustrates a further exemplary embodiment of a remote control 100 being attached to a user's body part 98, for example an arm of the user. It should be understood, that the remote control 100 may also be attached to for example the user's head. When being attached to the user's body, in particular when attaching the remote control in a gripping free manner (which means that no hands are required for holding the remote control), the remote control may comprise a motion sensor arrangement for detecting the position and orientation of the remote control. If for example attaching the remote control 100 to a user's arm, the user has free hands for other purposes, but may use the movement and the orientation of the arm to express his intention, so that the user's intention is detected by the motion sensor arrangement 130. The remote control 100, although not explicitly shown in Fig. 6, may comprise an interface for transmitting the user's intention to a corresponding interface being connected to the receiving unit 40.

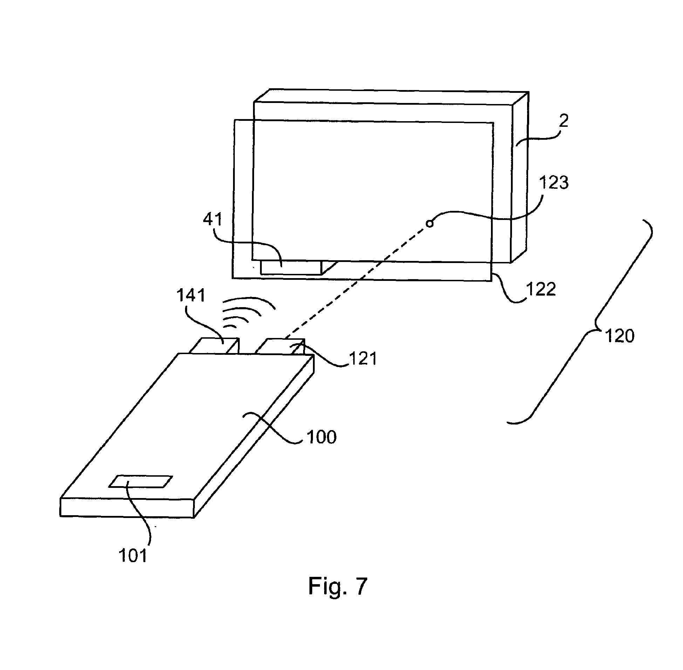

Fig. 7 illustrates an exemplary embodiment of a controlling device comprising a pointing unit 121 and a corresponding pointing sensitive unit 122. The pointing unit 121, in combination with the pointing sensitive unit of the pointing device together form a input terminal for a pointing device. The pointing sensitive unit 122 may be for example a transparent screen, which is sensitive to for example a laser pointer or the like, being disposed in the pointing unit 122 at the remote control side 100. The pointing unit 121 may be used for pointing a particular target menu bullet shown on the display 2 at a pointing location on the pointing sensitive unit 123. The selected menu bullet may be transferred as the user's intention to the controlling device, so that the controlling device may evaluate the user's intention by the receiving unit so as to compute an illustration of the menu structure seen from the point of view of the pointed target menu bullet.

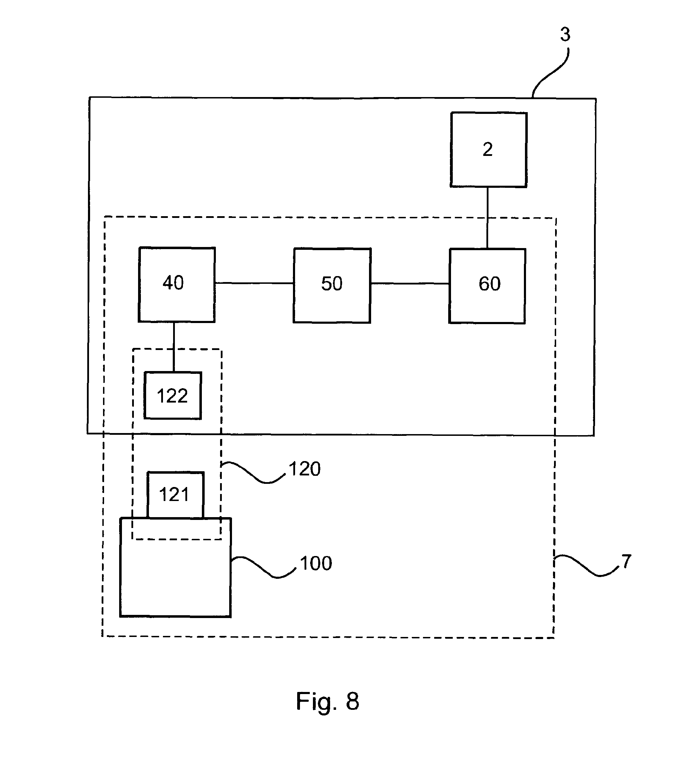

Fig. 8 illustrates a schematic overview of the controlling device shown in Fig. 7. The remote control 100 comprises a pointing unit 121 cooperating with the pointing sensitive unit 122. It should be noted that the pointing sensitive unit 122 may be connected to the receiving unit 40, so that the remote control 100 for particular embodiments does not need a further interface 141 for transmitting the user's intention, as the user's intention may be transmitted with the pointing unit 121 to the pointing sensitive unit 122. Nevertheless, the pointing sensitive unit 122 may be designed as a separate unit being attachable to for example a display device as shown in Fig. 7. Thus, the pointing sensitive unit may for example transmit the detected user's intention to the remote control, wherein the remote control transmits the user's intention via the interface 141 to the corresponding interface 41, being connected to the receiving unit.

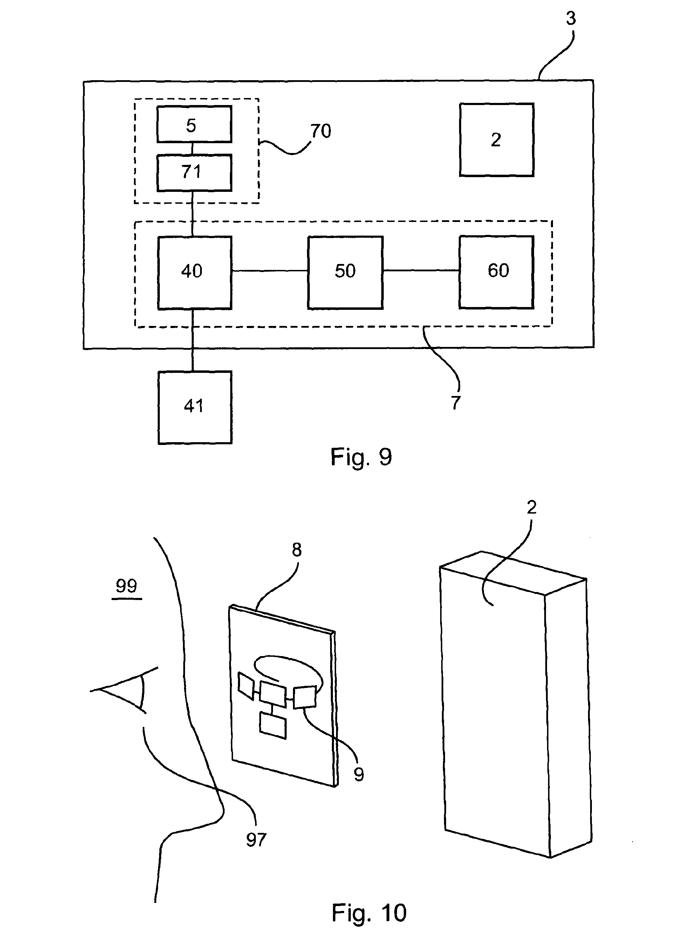

Fig. 9 illustrates an exemplary embodiment of a controlling device, wherein the controlling device may further comprise a user tracking system 70. The user tracking system may for example comprise a camera or any other user detecting device providing respective data to a user locating unit. The user locating unit may preprocess the detected user position and then may transmit the user position as a user's intention to the receiving unit 40. The user tracking system may include a camera 5 and an image recognition system for recognizing the user's position or the user's orientation. It should be noted that the user tracking system or the image recognition system may be further adapted for detecting the position and/or orientation of a body part of the user, so that for example the position and orientation of the user's hand may be interpreted as the user's intention being provided to the receiving unit 40. The receiving unit 40 then provides the user's intention to the computing unit for computing an illustration of the menu structure seen from a point of view of the target menu bullet. It should be noted, that when using the user tracking system 70, an interface 41 for a remote control is not mandatory but may be used for receiving additional user's intentions.

Fig. 10 illustrates an exemplary embodiment, according to which a screen 8 is provided as an attachable display device to be attached to the user 99. In particular, the display device, for example a screen or a transparent screen may be located in the user's view field 97, so that the user may recognize the content of the display device 8 or screen 8 together with the content of the display device 2. Thus, the user may recognize the menu structure 9 displayed on a display device 8 or a screen 8 at the same time as the content of the display device 2. It should be noted that the screen 8 may be a transparent screen being superimposed to the display device 2 with respect to the user's view field 97. However, the screen may also be provided as a non-transparent screen being located at the edge of a view field, so that the user for example may recognize the illustration of the menu structure 9 side by side to the content of the display device 2. With this respect, the screen 8 may be connected to a controlling unit (not shown) wherein the navigation through the menu structure 9 displayed on the screen 8 may be carried out by user's intention as described with respect to the previous figures.

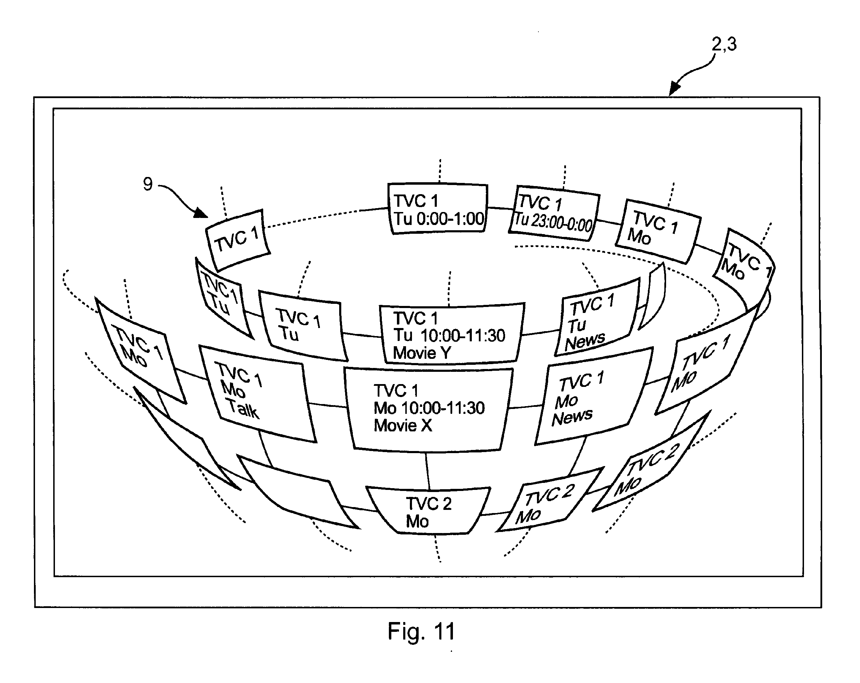

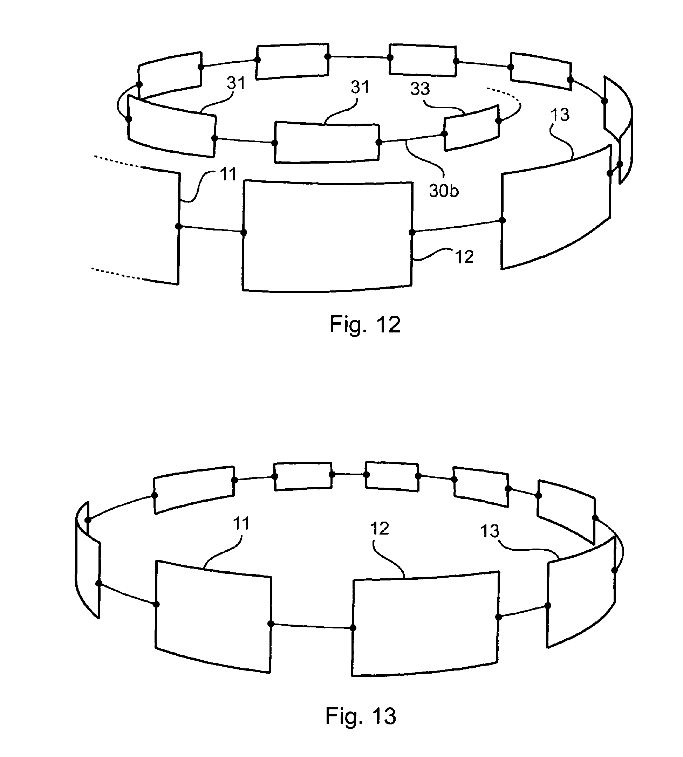

Fig. 11 illustrates the menu structure on a display device or multimedia device, respectively. The multimedia device 3 may include a display 2 as well as a controlling device as described above. A computation unit 50 as described above may be adapted for adapting the display 2 for displaying a three-dimensional menu structure 9 upon the user's intention. The menu bullets may be linked to each other so as to form chains, as will be described in further detail with respect to Figs. 12 and 13.

Fig. 12 illustrates a chain of menu bullets 11, 12, 13 being formed as a spiral. Thus, the user, when navigating along the first dimension, with menu bullets 11, 12, 13 will arrive at subsequent program elements of for example the following day. To arrive at a program element 31 of the following day corresponding to that of the present day 12 (for example both may relate to the morning news, menu bullet 12 for the present day and menu bullet 31 for the following day), the user has two possibilities to arrive at the target menu bullet 31 when starting from menu bullet 12. The first possibility is to move along the chain, so as to arrive sooner or later at the corresponding program element of the following day. The other possibility is to move along the third dimension, i.e. to move into the menu structure to conduct only a single step to arrive from the present menu bullet 12 to the target menu bullet 31. This time step from 12 to 31 is larger than the time steps between subsequent program elements 11, 12 and 13. Thus, the user may faster navigate through complex menu structures providing program elements of different days or weeks as well as a plurality of TV channels (not shown in Fig. 12). Nevertheless, such a possibility of a continuous chain as shown in Fig. 12 bers the risk to get lost in the menu structure, as the user may lose orientation.

Fig. 13 provides a structure, allowing the user to maintain at for example the same day when having a closed loop as a chain of program elements. In this case, when arriving at the end of the day, the next program element will be the first program element of the same day. Thus, the user only leaves the program elements of the present day when moving into the third dimension to a concentric sphere (not shown in Fig. 13).

It should be noted that the invention may also be applied to other menu applications and is not limited to menu applications for TV programs or several TV channels and broadcasting times.

### Reference list

- 2: display device; monitor; projection screen
- 3: multimedia device
- 5: camera, user detecting device
- 7: controlling device
- 8: transparent body attachable screen
- 9: menu structure
- 10: first dimension; first time scale
- 11, 12, 13: menu bullets of a first level of a first TV channel
- 20: second dimension; list of television channels
- 21, 22, 23: menu bullets of a first level of a second TV channel
- 30: third dimension; second time scale
- 30a: first level of the third dimension
- 30b: second level of the third dimension
- 31, 32, 33: menu bullets of a second level of a first TV channel
- 40: receiving unit
- 41: remote control interface, IR interface, radio interface
- 50: computing unit, display illustration adaption unit
- 60: display interface unit
- 70: user tracking system
- 71: user locating unit
- 97: user view field
- 98: user body part
- 99: user
- 100: remote control
- 101: enter button
- 110: input terminal for remote control navigation buttons
- 111: navigation button
- 112: navigation button
- 120: input terminal for pointing device
- 121: pointing unit of pointing device
- 122: pointing sensitive unit of pointing device
- 123: pointing location on pointing sensitive unit
- 130: motion sensor arrangement, acceleration sensor
- 141: interface (IR/radio) on remote control
- TCV1, 2 ...: television channel 1, 2, ...

## Claims

1. Controlling device for navigating through a menu structure (9) of a plurality of menu bullets (11, 12, 13; 21, 22, 23; 31, 32, 33) being arranged in a three-dimensional virtual reality on a display device (2), the controlling device comprising:
a receiving unit (40) being adapted for receiving a user's intention for three-dimensional menu navigation starting from a point of view of a user onto a present menu bullet to a target menu bullet,
a computing unit (50) being adapted for computing an illustration of the menu structure seen from a point of view of the user onto the target menu bullet,
a display interface unit (60) being adapted for outputting a computation result of the illustration of the menu structure seen from a point of view of the user onto the target menu bullet to a display device (2) and
a remote control (100) being connected to the receiving unit (40), wherein the remote control comprises input terminals (110, 120, 130) for inputting navigation commands representing the user's intention for three-dimensional menu navigation, wherein the remote control (100) comprises a motion sensor arrangement (130) being connected to the input terminals, wherein the motion sensor arrangement is adapted to detect a user's motion representing the user's intention and the remote control (100) is gripping free body attachable to the user's body, so as to follow a user's body part (98) motion, to which user's body part the remote control is to be attached.

2. Controlling device of claim 1, wherein the remote control (100) comprises navigation buttons (110, 111, 112) being connected to the input terminals, wherein the remote control is adapted to select a target menu bullet in the three-dimensional virtual reality by the navigation buttons representing the user's buttons.

3. Controlling device of any one of claims 1 and 2, wherein the remote control comprises a pointing unit (121) and a pointing sensitive unit (122), wherein the pointing sensitive unit is mounted with respect to a display device (2) so as to detect a pointing location (123) of the pointing unit onto the display device.

4. Controlling device of any one of claims 1 to 3, further comprising a user tracking system (70) for determining the spatial position of the user (99), wherein the user tracking system comprises a user locating unit (71) being adapted for determining the user's position with respect to a display device, wherein the user locating unit is connected to the receiving unit (40) for providing a user position as the user's intention.

5. Controlling device of any one of claims 1 to 4, wherein the computing unit (50) is adapted for computing the illustration of the menu structure seen from the user's position detected by the user tracking system (70).

6. Controlling device of nay one of claims 1 to 5, further comprising a transparent screen (8) being body attachable within the user's view field (97), wherein the transparent screen is adapted to illustrate the menu structure (9) so as to superimpose the menu structure to the display content.

7. A multimedia device (3) comprising
a display (2),
a controlling device (7) according to any one of claims 1 to 6,
wherein the computation unit (50) is adapted for adapting the display (2) for displaying the three-dimensional menu structure (9) upon the user's intention.

8. Multimedia device of claim 7, wherein the display adaption unit is adapted for controlling the display upon an actual position of the user, so that the user may recognize the tree-dimensional menu structure as virtually seen from the actual position of the user.

9. Multimedia device of any one of claims 7 and 8, wherein the menu structure comprises menu bullets into a first dimension (10), menu bullets into a second dimension (20) and menu bullets into a third dimension (30), wherein the first dimension of menu bullets and the second dimension of menu bullets are displayed parallel to a surface of the display device, wherein the third dimension of the menu bullets is displayed in a direction orthogonal to the surface of the display device.

10. Multimedia device according to any one of claims 7 to 9, wherein the menu bullets represent television program units, wherein the menu bullets (11, 12, 13) into the first dimension (10) represent television program units of respective television channels on a first time scale, wherein the menu bullets (11, 21) into the second dimension (20) represent television program units of respective broadcasting times of different television channels, wherein the menu bullets (11, 31) into the third dimension (30) represent television program units of respective television channels on a second time scale, wherein the second time scale is larger than the first time scale.

11. Multimedia device of any one of claims 7 to 10, wherein the menu bullets (11, 12, 13; 21, 22, 23; 31, 32, 33) into a respective dimension (10, 20, 30) are linked so as to form chain lines, wherein the chain lines into the first dimension (10) are closed loops, wherein the last menu bullet of a respective chain line is linked with the first menu bullet of that chain line of the same level (30a) into the third dimension (30).

12. Multimedia device of any one of claims 7 to 10, wherein the menu bullets (11, 12, 13; 21, 22, 23; 31, 32, 33) into a respective dimension (10, 20, 30) are linked so as to form chain lines, wherein the chain lines into the first dimension (10) are spiral chain lines, so that the last menu bullet of a first chain line in a first level (30a) of the third dimension (30) is linked with the first menu bullet of a second chain line in a second level (30b) of the third dimension, wherein the first level and the second level are adjacent levels.

## Patentansprüche

1. Steuervorrichtung zum Navigieren durch eine Menüstruktur (9) von mehreren Menüpunkten (11, 12, 13; 21, 22, 23; 31, 32, 33), die in einer dreidimensionalen virtuellen Realität auf einer Anzeigevorrichtung (2) angeordnet sind, wobei die Steuervorrichtung Folgendes umfasst:
eine Empfangseinheit (40), ausgelegt zum Empfangen der Absicht eines Benutzers, beginnend ab einem Blickpunkt eines Benutzers auf einen aktuellen Menüpunkt zu einem Ziel-Menüpunkt, durch das dreidimensionale Menü zu navigieren,
eine Recheneinheit (50), ausgelegt zum Berechnen einer Illustration der Menüstruktur, gesehen von einem Blickpunkt des Benutzers auf den Ziel-Menüpunkt,
eine Anzeigeschnittstelleneinheit (60), ausgelegt zum Ausgeben eines Rechenergebnisses der Illustration der Menüstruktur, gesehen von einem Blickpunkt des Benutzers auf den Ziel-Menüpunkt, an eine Anzeigevorrichtung (2), und
eine mit der Empfangseinheit (40) verbundene Fernsteuerung (100), wobei die Fernsteuerung Eingabeterminals (110, 120, 130) zum Eingeben von Navigationsbefehlen umfasst, die die Absicht des Benutzers repräsentieren, durch ein dreidimensionales Menü zu navigieren, wobei die Fernsteuerung (100) eine mit den Eingabeterminals verbundene Bewegungssensoranordnung (130) umfasst, wobei die Bewegungssensoranordnung zum Erkennen einer Bewegung des Benutzers ausgelegt ist, die die Absicht des Benutzers repräsentiert, und die Fernsteuerung (100) greiffrei am Körper des Benutzers angebracht werden kann, so dass sie der Bewegung des Körperteils (98) des Benutzers folgt, an dem die Fernsteuerung angebracht werden soll.

2. Steuervorrichtung nach Anspruch 1, wobei die Fernsteuerung (100) Navigationstasten (110, 111, 112) umfasst, die mit den Eingabeterminals verbunden sind, wobei die Fernsteuerung so ausgelegt ist, dass sie einen Ziel-Menüpunkt in der dreidimensionalen virtuellen Realität durch die die Benutzertasten repräsentierenden Navigationstasten auswählt.

3. Steuervorrichtung nach einem der Ansprüche 1 und 2, wobei die Fernsteuerung eine Zeigeeinheit (121) und eine zeigeempfindliche Einheit (122) umfasst, wobei die zeigeempfindliche Einheit mit Bezug auf eine Anzeigevorrichtung (2) so montiert ist, dass sie einen Zeigeort (123) der Zeigeeinheit auf der Anzeigevorrichtung erkennt.

4. Steuervorrichtung nach einem der Ansprüche 1 bis 3, die ferner ein Benutzerverfolgungssystem (70) zum Ermitteln der räumlichen Position des Benutzers (99) umfasst, wobei das Benutzerverfolgungssystem eine Benutzerortungseinheit (71) zum Ermitteln der Position des Benutzers mit Bezug auf eine Anzeigevorrichtung umfasst, wobei die Benutzerortungseinheit mit der Empfangseinheit (40) verbunden ist, um eine Benutzerposition als die Benutzerabsicht bereitzustellen.

5. Steuervorrichtung nach einem der Ansprüche 1 bis 4, wobei die Recheneinheit (50) zum Berechnen der Illustration der Menüstruktur ausgelegt ist, gesehen von der vom Benutzerverfolgungssystem (70) erkannten Benutzerposition.

6. Steuervorrichtung nach einem der Ansprüche 1 bis 5, die ferner einen transparenten Bildschirm (8) umfasst, der innerhalb des Sichtfeldes (97) des Benutzers am Körper des Benutzers angebracht werden kann, wobei der transparente Bildschirm so ausgelegt ist, dass er die Menüstruktur (9) auf dem Anzeigeinhalt überlagert illustriert.

7. Multimedia-Vorrichtung (3), die Folgendes umfasst:
ein Display (2),
eine Steuervorrichtung (7) nach einem der Ansprüche 1 bis 6,
wobei die Recheneinheit (50) zum Adaptieren des Displays (2) zum Anzeigen der dreidimensionalen Menüstruktur (9) nach Absicht des Benutzers ausgelegt ist.

8. Multimedia-Vorrichtung nach Anspruch 7, wobei die Display-Adaptionseinheit zum Steuern des Displays nach einer Ist-Position des Benutzers adaptiert ist, so dass der Benutzer die dreidimensionale Menüstruktur wie virtuell von der Ist-Position des Benutzers aus gesehen erkennen kann.

9. Multimedia-Vorrichtung nach einem der Ansprüche 7 und 8, wobei die Menüstruktur Menüpunkte in einer ersten Dimension (10), Menüpunkte in einer zweiten Dimension (20) und Menüpunkte in einer dritten Dimension (30) umfasst, wobei die erste Dimension von Menüpunkten und die zweite Dimension von Menüpunkten parallel zu einer Oberfläche der Anzeigevorrichtung angezeigt werden, wobei die dritte Dimension der Menüpunkte in einer Richtung orthogonal zur Oberfläche der Anzeigevorrichtung angezeigt wird.

10. Multimedia-Vorrichtung nach einem der Ansprüche 7 bis 9, wobei die Menüpunkte Fernsehprogrammeinheiten repräsentieren, wobei die Menüpunkte (11, 12, 13) in der ersten Dimension (10) Fernsehprogrammeinheiten von jeweiligen Fernsehkanälen auf einer ersten Zeitskala repräsentieren, wobei die Menüpunkte (11, 21) in der zweiten Dimension (20) Fernsehprogrammeinheiten von jeweiligen Sendezeiten unterschiedlicher Fernsehkanäle repräsentieren, wobei die Menüpunkte (11, 31) in der dritten Dimension (30) Fernsehprogrammeinheiten jeweiliger Fernsehkanäle auf einer zweiten Zeitskala repräsentieren, wobei die zweite Zeitskala größer ist als die erste Zeitskala.

11. Multimedia-Vorrichtung nach einem der Ansprüche 7 bis 10, wobei die Menüpunkte (11, 12, 13; 21, 22, 23; 31, 32, 33) in einer jeweiligen Dimension (10, 20, 30) so verknüpft sind, dass sie Kettenlinien bilden, wobei die Kettenlinien in der ersten Dimension (10) geschlossene Kreise sind, wobei der letzte Menüpunkt einer jeweiligen Kettenlinie mit dem ersten Menüpunkt dieser Kettenlinie derselben Ebene (30a) in der dritten Dimension (30) verknüpft ist.

12. Multimedia-Vorrichtung nach einem der Ansprüche 7 bis 10, wobei die Menüpunkte (11, 12, 13; 21, 22, 23; 31, 32, 33) in einer jeweiligen Dimension (10, 20, 30) so verknüpft sind, dass sie Kettenlinien bilden, wobei die Kettenlinien in der ersten Dimension (10) spiralförmige Kettenlinien sind, so dass der letzte Menüpunkt einer ersten Kettenlinie in einer ersten Ebene (30a) der dritten Dimension (30) mit dem ersten Menüpunkt einer zweiten Kettenlinie in einer zweiten Ebene (30b) der dritten Dimension verknüpft sind, wobei die erste Ebene und die zweite Ebene benachbarte Ebenen sind.

## Revendications

1. Dispositif de commande de navigation dans une structure de menu (9) d'une pluralité de puces de menu (11, 12, 13 ; 21, 22, 23 ; 31, 32, 33) disposées dans une réalité virtuelle tridimensionnelle sur un dispositif d'affichage (2), le dispositif de commande comportant :
une unité de réception (40) adaptée pour recevoir l'intention d'un utilisateur d'effectuer une navigation dans le menu tridimensionnelle en débutant à partir d'un point de vue d'un utilisateur concernant une puce de menu actuelle jusqu'à une puce de menu ciblée,
une unité informatique (50) adaptée pour calculer une illustration de la structure de menu observée d'un point de vue de l'utilisateur concernant la puce de menu ciblée,
une unité d'interface d'affichage (60) adaptée pour délivrer en sortie, sur un dispositif d'affichage (2), un résultat de calcul de l'illustration de la structure de menu observée du point de vue de l'utilisateur concernant la puce de menu ciblée et
une télécommande (100) reliée à l'unité de réception (40), dans lequel la télécommande comporte des bornes d'entrée (110, 120, 130) pour entrer des commandes de navigation représentant l'intention de l'utilisateur d'effectuer une navigation dans le menu tridimensionnelle, dans lequel la télécommande (100) comporte un agencement de capteurs de mouvement (130) relié aux bornes d'entrée, dans lequel l'agencement de capteurs de mouvement est adapté pour détecter un mouvement de l'utilisateur représentant l'intention de l'utilisateur et la télécommande (100) est un corps non préhensible pouvant être attaché au corps de l'utilisateur, de manière à suivre le mouvement d'une partie corporelle de l'utilisateur (98), partie corporelle de l'utilisateur à laquelle la télécommande doit être attachée.

2. Dispositif de commande selon la revendication 1, dans lequel la télécommande (100) comporte des touches de navigation (110, 111, 112) reliés aux bornes d'entrée, dans lequel la télécommande est adaptée pour sélectionner une puce de menu ciblée dans la réalité virtuelle tridimensionnelle par les touches de navigation représentant les touches de l'utilisateur.

3. Dispositif de commande selon l'une quelconque des revendications 1 et 2, dans lequel la télécommande comporte une unité de pointage (121) et une unité sensible au pointage (122), dans lequel l'unité sensible au pointage est montée par rapport à un dispositif d'affichage (2) de manière à détecter un emplacement de pointage (123) de l'unité de pointage sur le dispositif d'affichage.

4. Dispositif de commande selon l'une quelconque des revendications 1 à 3, comportant en outre un système de suivi d'utilisateur (70) pour déterminer la position spatiale de l'utilisateur (99), dans lequel le système de suivi d'utilisateur comporte une unité de localisation d'utilisateur (71) adaptée pour déterminer la position de l'utilisateur par rapport à un dispositif d'affichage, dans lequel l'unité de localisation d'utilisateur est reliée à l'unité de réception (40) pour fournir une position d'utilisateur en tant qu'intention de l'utilisateur.

5. Dispositif de commande selon l'une quelconque des revendications 1 à 4, dans lequel l'unité informatique (50) est adaptée pour calculer l'illustration de la structure de menu vue depuis la position de l'utilisateur détectée par le système de suivi d'utilisateur (70).

6. Dispositif de commande selon l'une quelconque des revendications 1 à 5, comportant en outre un écran transparent (8) pouvant être attaché au corps dans le champ de vision de l'utilisateur (97), dans lequel l'écran transparent est adapté pour illustrer la structure de menu (9) de manière à superposer la structure de menu au contenu de l'affichage.

7. Dispositif multimédia (3) comportant :
un affichage (2),
un dispositif de commande (7) selon l'une quelconque des revendications 1 à 6,
dans lequel l'unité informatique (50) est adaptée pour adapter l'affichage (2) de manière à afficher la structure de menu tridimensionnelle (9) en fonction de l'intention de l'utilisateur.

8. Dispositif multimédia selon la revendication 7, dans lequel l'unité d'adaptation d'affichage est adaptée pour commander l'affichage en fonction d'une position actuelle de l'utilisateur, de sorte que l'utilisateur peut reconnaître la structure de menu tridimensionnelle telle que virtuellement vue depuis la position actuelle de l'utilisateur.

9. Dispositif multimédia selon l'une quelconque des revendications 7 et 8, dans lequel la structure de menu comporte des puces de menu dans une première dimension (10), des puces de menu dans une deuxième dimension (20) et des puces de menu dans une troisième dimension (30), dans lequel la première dimension de puces de menu et la deuxième dimension de puces de menu sont affichées parallèlement à une surface du dispositif d'affichage, dans lequel la troisième dimension des puces de menu est affichée dans une direction orthogonale à la surface du dispositif d'affichage.

10. Dispositif multimédia selon l'une quelconque des revendications 7 à 9, dans lequel les puces de menu représentent des unités de programme télévisé, dans lequel les puces de menu (11, 12, 13) dans la première dimension (10) représentent des unités de programme télévisé de canaux de télévision respectifs sur une première échelle de temps, dans lequel les puces de menu (11, 21) dans la deuxième dimension (20) représentent des unités de programme télévisé d'heures de diffusion respectives de différents canaux de télévision, dans lequel les puces de menu (11, 31) dans la troisième dimension (30) représentent des unités de programme télévisé de canaux de télévision respectifs sur une seconde échelle de temps, dans lequel la seconde échelle de temps est plus grande que la première échelle de temps.

11. Dispositif multimédia selon l'une quelconque des revendications 7 à 10, dans lequel les puces de menu (11, 12, 13 ; 21, 22, 23 ; 31, 32, 33) dans une dimension (10, 20, 30) respective sont liées de manière à former des lignes de chaînes, dans lequel les lignes de chaînes dans la première dimension (10) sont des boucles fermées, dans lequel la dernière puce de menu d'une ligne de chaînes respective est liée à la première puce de menu de cette ligne de chaînes du même niveau (30a) dans la troisième dimension (30).

12. Dispositif multimédia selon l'une quelconque des revendications 7 à 10, dans lequel les puces de menu (11, 12, 13 ; 21, 22, 23 ; 31, 32, 33) dans une dimension (10, 20, 30) respective sont liées de manière à former des lignes de chaînes, dans lequel les lignes de chaînes dans la première dimension (10) sont des lignes de chaînes en spirale, de sorte que la dernière puce de menu d'une première ligne de chaînes à un premier niveau (30a) de la troisième dimension (30) est liée à la première puce de menu d'une seconde ligne de chaînes à un second niveau (30b) de la troisième dimension, dans lequel le premier niveau et le second niveau sont des niveaux adjacents.
